(19) Europäisches Patentamt
European Patent Office
Office européen des brevets

(11) **EP 4 769 935 A1**

(12) **EUROPEAN PATENT APPLICATION**
published in accordance with Art. 153(4) EPC

(43) Date of publication:
**01.07.2026 Bulletin 2026/27**

(21) Application number: **24856220.9**

(22) Date of filing: **26.07.2024**

(51) International Patent Classification (IPC):
*H02P 25/024* (2016.01)

(52) Cooperative Patent Classification (CPC):
**H02P 25/024**

(86) International application number:
**PCT/JP2024/026798**

(87) International publication number:
**WO 2025/041527 (27.02.2025 Gazette 2025/09)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **24.08.2023 JP 2023136618**

(71) Applicant: **DENSO CORPORATION**
**Kariya-city, Aichi 448-8661 (JP)**

(72) Inventors:
• **MORITA, Masahito**
**Kariya- city, Aichi 4488661 (JP)**
• **YOSHIMURA, Masataka**
**Kariya- city, Aichi 4488661 (JP)**

(74) Representative: **Kuhnen & Wacker**
**Patent- und Rechtsanwaltsbüro PartG mbB**
**Prinz-Ludwig-Straße 40 A**
**85354 Freising (DE)**

(54) **CONTROL DEVICE AND CONTROL PROGRAM FOR ROTATION ELECTRIC MACHINE**

(57)     A control device (30) is applied to a system including a motor having a stator (50) provided with stator windings (52) and a rotor (60) provided with field windings (70), and an inverter (20) electrically connected to the stator windings. The control device includes: an excitation current calculation unit configured to calculate an excitation current to be supplied to the stator windings, which induces field current in the field windings, and a switch control unit configured to perform switching control of the inverter to cause a composite current, in which the excitation current is superimposed to a fundamental wave current, a frequency of the excitation current being higher than a frequency of the fundamental wave current, to flow through the stator windings. The excitation current calculation unit calculates the excitation current including a lower frequency (fi-fr) component obtained by subtracting an electrical angular frequency (fr) of the rotor from the target frequency (fi) of the field current, and an upper frequency (fi+fr) component obtained by adding the electrical angular frequency to the target frequency.

FIG.5

EP 4 769 935 A1

**Description**

[CROSS-REFERENCE TO RELATED APPLICATIONS]

This application is based on and claims the benefit of Japanese Application No. 2023-136618 filed on August 24, 2023. The contents of this application are incorporated herein by reference in their entirety.

[TECHNICAL FIELD]

This disclosure relates to a control device and a control program.

[BACKGROUND ART]

Conventionally, wound field motors are known. The wound field motor is provided with a stator including stator windings and a rotor including field windings. In the motor described in Patent Document 1, induced current, superimposed with high-frequency excitation current on the fundamental wave current of the stator, flows through field windings of the motor. The induced current is rectified into a unidirectional current by a rotor rectifier circuit and utilized as field current. The field windings includes a first portion and a second portion. In the rotor rectifier circuit, one end of a capacitor is connected to the connection point of the first portion and the second portion, and the other end is connected to one end of a diode. In the rotor rectifier circuit, a series resonant circuit is formed by the first part of the field windings and the capacitor, and a parallel resonant circuit is formed by the second part of the field windings and the capacitor. Hereafter, resonant frequency of the series resonant circuit is referred to as series resonant frequency, and resonant frequency of the parallel resonant circuit is referred to as parallel resonant frequency. By controlling the frequency of the high-frequency excitation current to be between the series resonance frequency and the parallel resonance frequency, or to approach a value either the series resonance frequency or the parallel resonance frequency, the impedance of the rotor field windings during excitation is reduced, thereby reducing torque ripple caused by the high-frequency excitation current.

[PRIOR ART REFERENCES]

[PATENT DOCUMENT]

[Patent Document 1] JP2018102111A

[SUMMARY OF INVENTION]

The frequency of the field current flowing through the rotor field windings varies with the rotational speed of the rotor. In the technology described in Patent Document 1, the high-frequency excitation current is set to include a single frequency component relative to the target value, which is target frequency for the field current flowing through the field windings. Consequently, the actual frequency of the field current may deviate from the target frequency. In the technology described in Patent Document 1, even if the target frequency of the field current is set near first resonance frequency or second resonance frequency for the purpose of reducing torque ripple, the actual frequency of the field current may deviate from the vicinity of the first resonance frequency or the second resonance frequency. Consequently, torque ripple may not be reduced in some cases.

The present disclosure aims to provide a motor control device and a control program capable of suppressing deviation of the actual frequency of the field current from its target frequency.

This disclosure provides a control device for a system comprising a motor having a stator provided with stator windings and a rotor provided with field windings, and an inverter electrically connected to the stator windings. The control device comprises: an excitation current calculation unit configured to calculate an excitation current to be supplied to the stator windings, which induces field current in the field windings, and a switch control unit configured to perform switching control of the inverter to cause a composite current, in which the excitation current is superimposed to a fundamental wave current, a frequency of the excitation current being higher than a frequency of the fundamental wave current, to flow through the stator windings. The excitation current calculation unit calculates the excitation current including a lower frequency component obtained by subtracting an electrical angular frequency of the rotor from the target frequency of the field current, and an upper frequency component obtained by adding the electrical angular frequency to the target frequency.

By including two frequency components in the excitation current, obtained by subtracting frequency of electrical angular of the rotor from the target frequency of field current or adding frequency of the electrical angular of the rotor to the target frequency of field current, the frequency of the field windings approaches the target frequency.

Accordingly, the excitation current calculation unit of the present disclosure calculates the excitation current including a lower frequency component obtained by subtracting an electrical angular frequency of the rotor from the target frequency of the field current, and an upper frequency component obtained by adding the electrical angular frequency to the target frequency. Therefore, according to the present disclosure, it is possible to suppress frequency deviation between the actual frequency flowing through the stator windings and the target frequency.

[BRIEF DESCRIPTION OF DRAWINGS]

The above objectives and other objectives, features, and advantages of the present disclosure will become clearer through the detailed description below, with reference to the accompanying drawings. These drawings are as follows:

Figure 1 is a general configuration diagram of a motor control system according to an embodiment,
Figure 2 is a diagram showing an inverter and its peripheral components,
Figure 3 is a cross-sectional view of a rotor and a stator,
Figure 4 is a diagram showing an electrical circuit provided in the rotor,
Figure 5 is a block diagram of a torque control processing of a control device,
Figure 6 is a diagram showing fundamental wave current and high-frequency excitation current (harmonic current),
Figure 7 is a diagram showing a relationship between target frequency and upper and lower frequency components,
Figure 8 is a diagram showing a relationship between the frequency of the current flowing through the windings and the motor torque,
Figure 9 is a diagram showing a relationship between the change in resonance frequency and the motor torque,
Figure 10 is a flowchart showing a motor control process,
Figure 11 is a diagram showing fundamental wave current and high-frequency excitation current according to another embodiment.

[DESCEIPTION OF EMBODIMENTS]

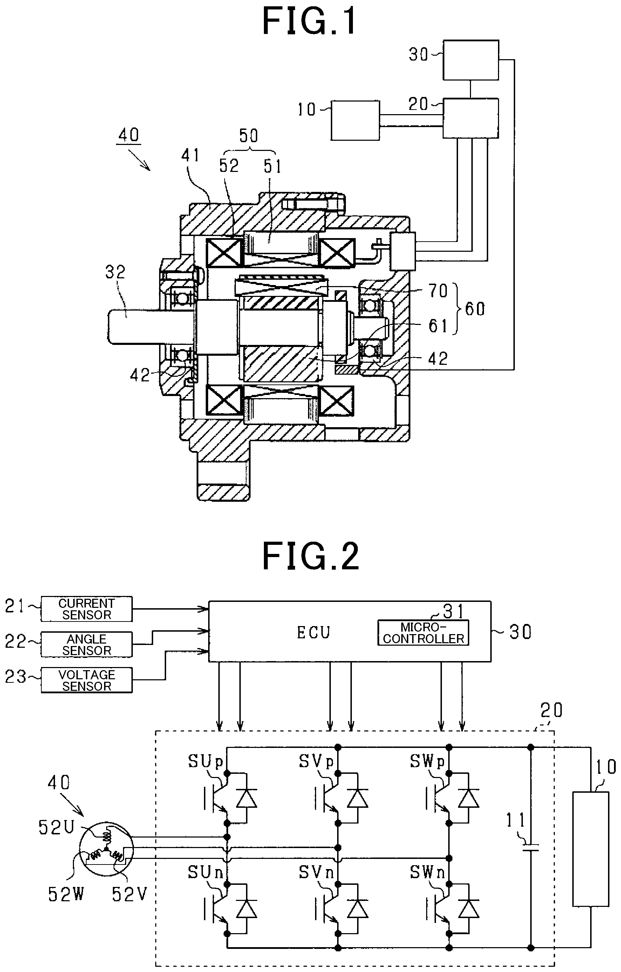

The following describes embodiments embodying a motor control device of the present disclosure with reference to drawings. The motor 40 and the control device 30 shown in Figure 1 constitute a control system for a motor. The control system is mounted to a vehicle. The motor40 serves as propulsion power source, of the vehicle. As shown in Figure 1, the control system includes a DC power supply 10, an inverter 20, the control device 30, and the motor 40. The motor 40 is a self-excited field windings type synchronous machine. The motor 40, inverter 20, and control device 30 may be integrally configured as an electromechanically integrated drive unit, or the motor 40, inverter 20, and control device 30 may each be configured separately.

The motor 40 is provided with a housing 41, and a stator 50 and a rotor 60 housed within the housing 41. The motor 40 of this embodiment is an inner rotor type motor where the rotor 60 is positioned radially inside the stator 50.

The stator 50 is provided with a stator core 51 and stator windings 52. The stator windings 52 are formed, for example, of copper wire and include U, V, and W-phase windings 52U, 52V, and 52W arranged with an offset of 120° therebetween in electrical angle

The rotor 60 is provided with a rotor core 61 and field windings 70. The field windings 70 is composed of, for example, aluminum wire, copper wire, or CNT (carbon nanotube).

A rotary shaft 32 is inserted through central bore of the rotor core 61. The rotary shaft 32 is rotatably supported in the housing 41 via bearings 42.

As shown in Figure 2, the inverter 20 includes a series-connected element of a U-phase upper arm switch UP and a U-phase lower arm switch SUn, a series-connected element of a V-phase upper arm switch SVp and a V-phase lower arm switch SVn, and a series-connected element of a W-phase upper arm switch WSVp and a W-phase lower arm switch SWn. First end of the U-phase winding 52U is connected to a connection point of the U-phase upper arm switch UP and the U-phase lower arm switch SUN. First end of the V-phase winding 52V is connected to a connection point of the V-phase upper arm switch UP and the V-phase lower arm switch UP. First end of the W-phase winding 52W is connected to a connection point of the W-phase upper arm switch SWp and the W-phase lower arm switch SWn. Second end of the U-phase winding 52U, second end of the V-phase winding 52V, and second end of the W-phase winding 52W are connected to a neutral point. In this embodiment, the U-phase winding 52U, the V-phase winding 52V, and the W-phase winding 52W are connected in a star configuration. In this embodiment, each of the switches SUp to SWn is an IGBT. A freewheeling diode is connected in reverse parallel to each of the switches SUp to SWn.

The positive terminal of the DC power supply 10 is connected to the collector of each of the U-phase upper arm switch SUp, the V-phase upper arm switch SVp, and the W-phase upper arm switch SWp. The negative terminal of the DC power supply 10 is connected to the emitter of each of the U-phase lower arm switch SUn, the V-phase lower arm switch SVn, and the W-phase lower arm switch SWn. A smoothing capacitor 11 is connected in parallel to the DC power supply 10.

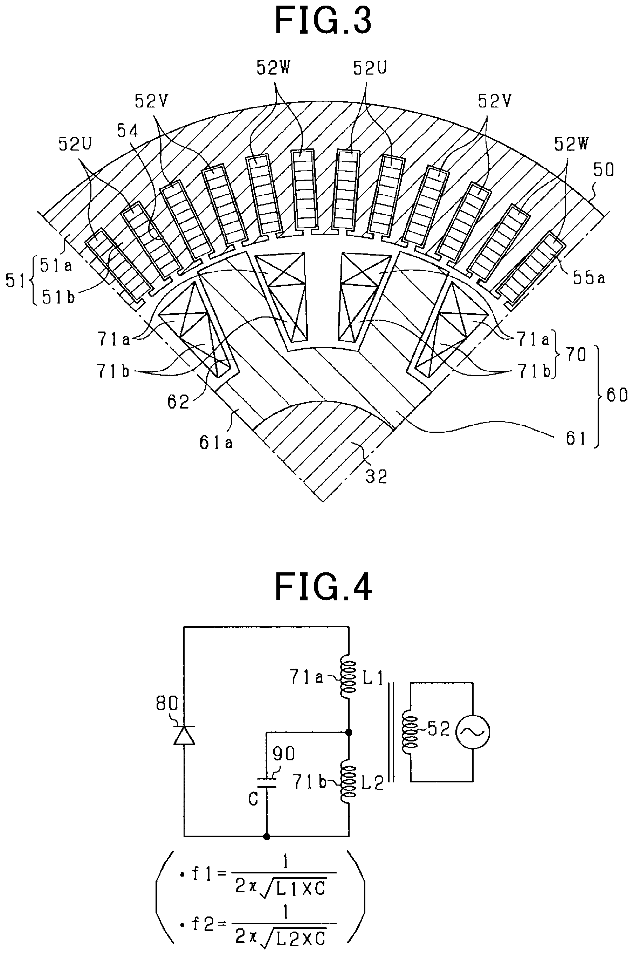

Next, referring to Figure 3, the stator 50 and rotor 60 will be described.

Each of the stator 50 and the rotor 60 is disposed coaxially with the rotary shaft 32 (specifically, on the rotation center axis O). In the following description, a direction in which the rotary shaft 32 extends is defined as an axial direction, a direction extending radially from the center of the rotary shaft 32 is defined as a radial direction, and a direction extending circumferentially around the rotary shaft 32 is defined as a circumferential direction.

The stator 50 may be composed of laminated steel sheets made of soft magnetic material. The stator 50 has a ring-shaped back yoke 51a and a plurality of teeth 51b protruding radially inward (toward the rotational center axis O) from the back yoke 51a. A plurality of slots 54 are formed circumferentially between adjacent teeth 51b. The stator winding 52 is formed by accommodating phase windings of each phase in a predetermined order within each slot 54. For example, the stator 50 may employ a segment coil structure using a plurality of conductor segments. However, the structure of the stator winding 52 is arbitrary.

The rotor 60 may be composed of laminated steel sheets made of soft magnetic material. The rotor 60 has a cylindrical rotor core 61 and a plurality of main poles 62 protruding radially outward (away from the rotational center axis O) from the rotor core 61. In this embodiment, eight main poles 62 are provided at equal intervals in the circumferential direction.

The field windings 70 includes a first wiring 71a and a second wiring 71b. In each main pole 62, the first wiring 71a is wound on the radially outer portion, and the second wiring 71b is wound on the radially inner portion relative to the first wiring 71a. In each main pole 62, the winding directions of the first wiring 71a and the second wiring 71b are the same. For any pair of circumferentially adjacent main poles 62, the winding direction of each wiring 71a, 71b wound on one main pole 62 is opposite to the winding direction of each wiring 71a, 71b wound on the other main pole 62. Consequently, the magnetization directions of circumferentially adjacent main pole 62s are opposite to each other.

Figure 4 shows an electrical circuit of the rotor 60, including the wiring 71a and the wiring 71b wound on a common main pole 62. The rotor 60 is provided with a diode 80 as a rectifying element and a capacitor 90. The diode 80 is electrically connected in parallel with the series-connected element of the first wiring 71a and the second wiring 71b. More specifically, a cathode of the diode 80 is connected to the first end of the first wiring 71a, and the second end of the first wiring 71a is connected to the first end of the second wiring 71b. An anode of the diode 80 is connected to the second terminal of second wiring 71b. The capacitor 90 is electrically connected in parallel with the second wiring 71b. In Figure 4, L1 indicates inductance of the first wiring 71a, L2 indicates inductance of the second wiring 71b, and C indicates capacitance of the capacitor 90.

In this embodiment, a series resonant circuit including the first inductor wiring 71a, the capacitor 90, and the diode 80 is configured, and a parallel resonant circuit including the second wiring 71b and the capacitor 90 is configured. The series resonant circuit shown in Figure 4 corresponds to a first circuit formed by the first inductor wiring 71a and the capacitor 90. The first resonant frequency f1 is resonant frequency of the first circuit (the series resonant circuit). The parallel resonant circuit shown in Figure 4 corresponds to a second circuit formed by the second wiring 71b and the capacitor 90. The second resonant frequency f2 is resonant frequency of the second circuit (the parallel resonant circuit). Each resonance frequency f1 and f2 is expressed by equations (1) and (2). In this embodiment, when the number of turns of the first wiring 71a smaller than the number of turns of the second wiring 71b, L1 is smaller than L2, and the first resonance frequency f1 is higher than the second resonance frequency f2.

[Math 1]

$$f1 = \frac{1}{2\pi\sqrt{L1 \cdot C}} \quad (1)$$

[Math 2]

$$f2 = \frac{1}{2\pi\sqrt{L2 \cdot C}} \quad (2)$$

The anode of the diode 80 may be connected to the first end of the first wiring 71a, and the cathode of the diode 80 may be connected to the second end of the second wiring 71b, instead of above-mentioned configuration.

Returning to the description of Figure 2, the control system further comprises a current sensor 21, an angle sensor 22, and a voltage sensor 23. The current sensor 21 detects current flowing through at least two phases of the motor 40. The angle sensor 22 detects rotational angle (electrical angle) of the rotor 60. The voltage sensor 23 detects voltage of the DC power supply 10. The detected values by each sensor 21 to 23 are input to the control device 30.

The control device 30 is an electronic control unit (ECU), primarily composed of a microcontroller 31. The microcontroller 31 includes a CPU (Central Processing Unit). The functions provided by the microcontroller 31 are provided by software recorded in a physical memory device and a computer executing it, by software alone, by hardware alone, or by a combination thereof. For example, when the microcontroller 31 is provided by electronic circuitry as hardware, the electronic circuitry includes digital circuits containing numerous logic circuits or analog circuits. For instance, the microcontroller 31 may execute a program stored in a non-transitory tangible storage medium serving as its own memory section. By executing the set of instructions constituting the program, the method corresponding to the program is performed. The storage unit may be, for example, non-volatile memory. The program stored in the storage unit may be updated via a communication network such as the Internet using a method known as OTA (Over The Air).

The control device 30 generates drive signals to turn the switches SUp to SWn, which constitute the inverter 20, on and off. More specifically, the control device 30 generates the drive signals to turn on and off each arm switch SUp to SWn for converting DC power supplied from the DC power supply 10 into AC power and supplying it to the U-phase winding 52U, the V-phase winding 52V, and the W-phase winding 52W, respectively. The generated drive signals are supplied to the gates of each arm switch SUp to SWn.

The control device 30 turns on and off each switch SUp to SWn for causing composite current including high-frequency excitation current and fundamental wave current to flow through each phase winding 52U, 52V, and 52W. Frequency of the high-frequency excitation current is higher than frequency of the fundamental wave current. The fundamental wave current is primarily current for generating torque in the motor 40. The high-frequency excitation current is primarily current for exciting the field windings 70 to induce the field current in the field windings 70. Phase currents flowing through the phase windings 52U, 52V, and 52W are phase-shifted by 120° therebetween in electrical angle.

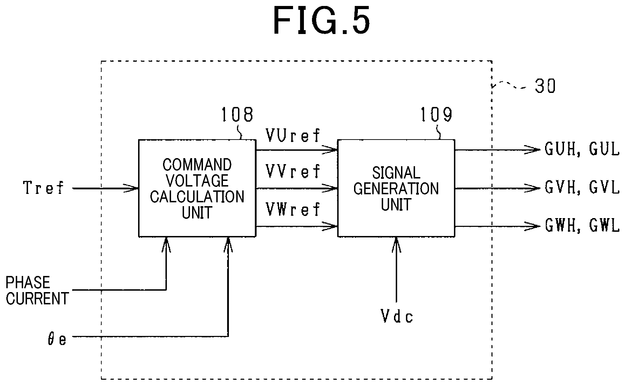

Referring to Figure 5, the torque control of the motor 40 performed by control device 30 will be described.

A command voltage calculation unit 108 calculates U-phase command voltage VUrf, V-phase command voltage VVref, and W-phase command voltage VWref in the three-phase fixed coordinate system based on command torque Trf, the detected value by the current sensor 21, and the electrical angle θe detected by the angle sensor 22. The waveforms of U-phase command voltage VUref, V-phase command voltage VVref, and W-phase command voltage VWref are phase-shifted by 120° therebetween in electrical angle. The command voltage calculation unit 108 is an example of an "excitation current calculation unit".

A signal generation unit 109 generates drive signals for the upper arm swithes SUp to SWp and the lower arm swithes SUn to SWn in U, V, and W-phase for causing the composite current to flow through the stator windings 52 based on the U-phase command voltage VUref, the V-phase command voltage VVref, and the W-phase command voltage VWref. The generated drive signals are input to the gates of each switch. Then the switching control of inverter 20 is performed. The signal generation unit 109 is an example of a "switch control unit".

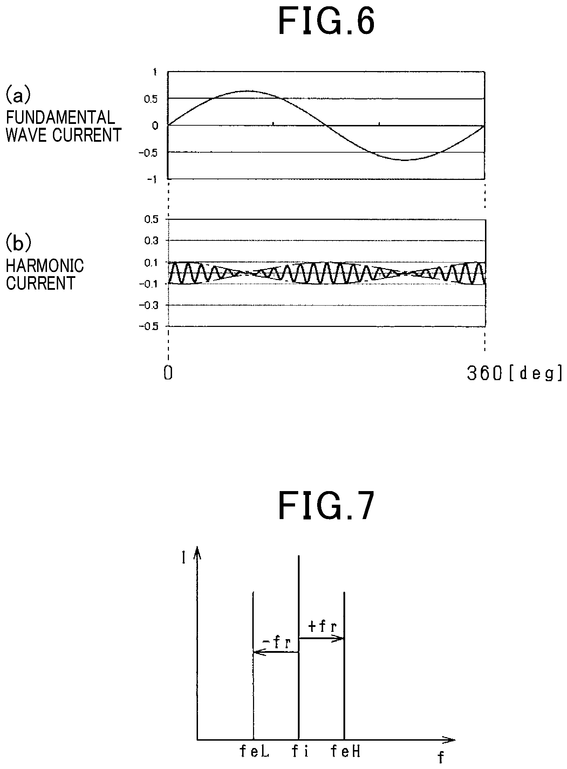

By the switching control of the inverter 20, the composite current in which the high-frequency excitation current (solid line in part (b) of Figure 6) is superimposed to the fundamental wave current (part (a) of Figure 6) flows through in each phase winding 52U, 52V, 52W. The high-frequency excitation current flowing through the stator windings 52 causes field current to flow through the field windings 70. Part (a) of Figure 6 shows the transition of the fundamental wave current over one electrical angle period. Dotted line in part (b) of Figure 6 indicates the envelope of the high-frequency excitation current. The period of the envelope is the same as that of the fundamental wave current. The values on the vertical axis shown in Figure 6 indicate the relative relationship between the magnitudes of the waveforms shown in part (a) and part (b) of Figure 6.

The frequency of the high-frequency excitation current is, for example, N times the frequency of the fundamental wave current (where N is an integer of 2 or greater). However, this is not limited to this; as long as the frequency of the high-frequency excitation current is higher than the frequency of the fundamental wave current, the frequency of the high-frequency excitation current may deviate from being N times the frequency of the fundamental wave current.

Next, explanation is given using U-phase as an example. Due to the switching control of the inverter 20, the fundamental wave current IUb flowing through the U-phase winding 52U is expressed by equation (3), and high-frequency excitation current IUh is expressed by equation (4). In equations (3) and (4), IUamp is the effective value of the amplitude of the fundamental current IUb, $\omega$e is electrical angular speed of the rotor 60, Rh is the harmonic rate (%), and fi is the target frequency of the field current. In Equations (3) and (4), to simplify the explanation, the phase θs of the fundamental wave current IUb, the phase θh of the high-frequency excitation current IUh, and the phase θR of the high-frequency excitation current IUh relative to the fundamental wave current IUb are all set to zero (θs = 0, θR = 0, θh = 0).

[Math 3]

$$IUb = \sqrt{2} \times IUamp \times \sin \omega e \quad (3)$$

[Math 4]

$$IUh = \sqrt{2} \times IUamp \times \sin\left(\omega e - 90 \times 2 \times \frac{\pi}{360}\right) \times \sin(2\pi \cdot f_i \cdot t) \times \frac{Rh}{100} \quad (4)$$

Herein after, assuming Ik = √2 x Iua × Rh / 100. The electrical angular speed ωe is expressed as ωe = (N/60) × (p/2) × 2πt, and the electrical angular frequency fr of rotor 60 is expressed as fr = (N/60) × (p/2), using the rotational speed N (rpm) of the rotor 60 and the number of poles p. Therefore, in equations (3) and (4), the electrical angular speed ωe is expressed as "ωe = 2π × fr × t". Equation (4) is converted to equation (5) by applying the trigonometric sum-to-product formula. As shown in equation (5), the high-frequency excitation current IUh contains both the lower frequency feL (= fi - fr) component and the upper frequency feH (= fi + fr) component. RFI is the intermediate (e.g., central) frequency between the lower frequency feL and the upper frequency feH. RFI is set to a value closer to the first resonance frequency f1 than the second resonance frequency f2. In this embodiment, the command voltage calculation unit 108 calculates the U-phase command voltage VUref, the V-phase command voltage VVref, and the W-phase command voltage VWref such that the amplitude of the lower frequency feL component and the amplitude of the upper frequency feH component are equivalent (e.g., the same). For example, the command voltage calculation unit 108 may calculate the U-phase command voltage VUref, the V-phase command voltage VVref, and the W-phase command voltage VWref such that the amplitude of the high-frequency excitation current is at least 3% of the amplitude of the fundamental wave current. The control device 30 may calculate electric angler frequency fr used in torque control, for example, based on the detected electrical angle θe.

[Math 5]

$$IUh = Ik \times \sin\left(\omega - 90 \times 2 \times \frac{\pi}{360}\right) \times \sin(2\pi \cdot f_i \cdot t)$$
$$= Ik \times \cos(2\pi \cdot f_r \cdot t) \times \sin(2\pi \cdot f_i \cdot t)$$
$$= Ik \times \frac{1}{2}[\sin\{2\pi \cdot (f_i - fr)\cdot t\} + \sin\{2\pi \cdot (f_i + fr)\cdot t\}] \quad (5)$$

Each of the U-phase command voltage VUref, the V-phase command voltage VVref, and the W-phase command voltage VWref may include a lower frequency feL component and an upper frequency feH component. In this case, as shown in Figure 7, the frequency of the field current actually flowing through each phase winding 52U, 52V, 52W of the field windings 70 is equivalent to the target frequency fi (e.g., the same frequency as the target frequency fi), regardless of the rotational speed of the rotor 60. That is, it is possible to suppress deviation of the actual frequency of the field current flowing through each phase winding 52U, 52V, 52W from the target frequency fi due to the influence of the rotational speed of the rotor 60.

As described above, the control device 30 includes both the lower frequency feL (= fi - fr) and the upper frequency feH (= fi + fr) frequency components in the high-frequency excitation current. The high-frequency excitation current contains not just a single frequency component, but two components: the lower frequency feL component and the upper frequency feH component. Therefore, it is possible to suppress deviation of the actual frequency field current flowing in the windings from the target frequency fi due to the influence of the rotational speed of the rotor 60. Consequently, it is possible to suppress deviation of the actual flowing field current frequency from the target frequency fi.

As a result, the frequency of the field current flowing through the field windings 70 is suppressed from deviating from the target frequency fi, thereby contributing to improved performance of the motor 40. For example, when the target frequency fi of the field current is set to a frequency near the first resonance frequency f1, excitation is enhanced to reduce the amplitude of the high-frequency excitation current, thereby reducing the torque ripple of the motor 40.

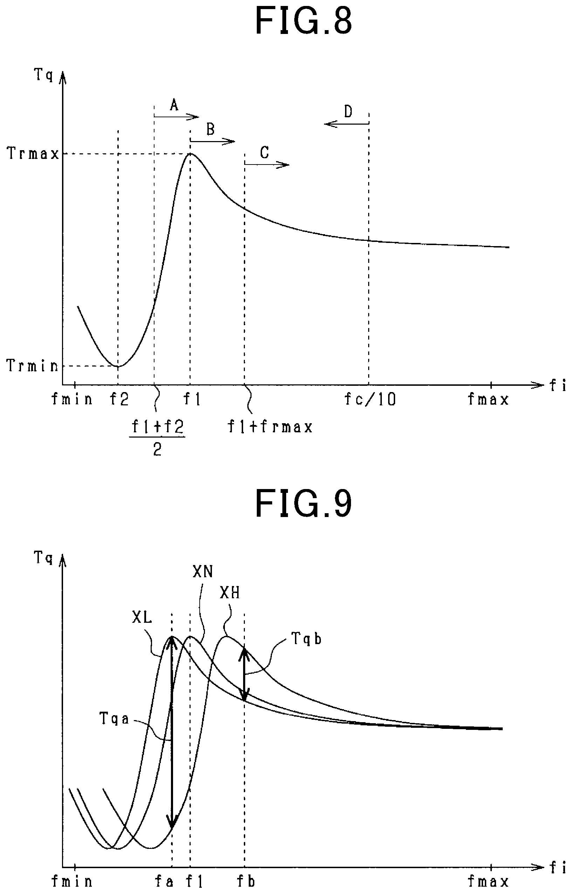

Next, the method for setting the target frequency fi will be described in detail, referring to Figures 8 and 9.

Figure 8 is a characteristic diagram showing a relationship between the target frequency fi of the field current and the torque Tq of the motor 40. In Figure 8, the horizontal axis indicates the target frequency fi, and the vertical axis indicates the torque Tq. In the field windings 70 shown in Figure 4, the first resonance frequency f1 is higher than the second resonance frequency f2. The minimum value achievable for the target frequency fi within the range realizable by the control system is defined as the minimum frequency fmin and the maximum value within this range is defined as the maximum frequency fmax. Within this range, the second resonance frequency f2, which is a parallel resonance frequency, is frequency that minimizes the torque Tq to its minimum value Trmin. The first resonance frequency f1, which is a series resonance frequency, is frequency that maximizes the torque Tq to its maximum value Trmax. The torque Tq of the motor 40 decreases as the target frequency fi increases within the range fmin ≤ fi < f2, reaching its minimum at fi = f2. Within the range f1 > fi > f2, the rorque Tq increases as the target frequency fi increases, reaching its maximum at fi = f₁. In the range fmax ≥ fi > f₁, the torque Tq decreases as target frequency fi increases.

As shown in Figure 8, compared to the range fmin ≤ fi < f1, the change in the torque Tq relative to the change in the target frequency fi is smaller in the range fmax ≥ fi ≥ f1. In the range fi > f1, the torque Tq decreases as the target frequency fi increases, but as the target frequency fi increases, the torque Tq approaches a predetermined torque value.

The control device 30 may set the target frequency fi to a value closer to the first resonance frequency f1 than the second resonance frequency f2. In this case, the target frequency fi is set to a value higher than the midpoint value of the first resonance frequency f1 and the second resonance frequency f2, which is (f1 + f2)/2. The control device 30 can set the target frequency fi to a value higher than (f1 + f2)/2, as shown at A in Figure 8. In this case, the motor 40 is operated under conditions where the torque Tq is relatively large.

It is preferable for the control device 30 to set the target frequency fi of the field current to a value higher than the first resonance frequency f1. The range for such the target frequency fi is the range indicated by B in Figure 8 (the range where fi > f1). As shown in Figure 8, the change in the torque Tq corresponding to a change in the target frequency fi within the range B is smaller than the change in the torque Tq corresponding to a change in the target frequency fi outside the range B. Although the torque Tq within the range B does not reach the maximum torque Trmax at fi = f1, it is a relatively large value close to the maximum Trmax. That is, setting the target frequency fi of the field current to a value higher than the first resonance frequency f1 allows the motor 40 to operate under conditions where the torque Tq is relatively large and the change in the torque Tq is small.

The first resonance frequency f1 and the second resonance frequency f2 may increase or decrease from their initial values (e.g., the values when the control system is new) due to factors such as degradation of the field windings 70 caused by current flowing through it or the temperature characteristics of the field windings 70. In Figure 9, each of XN, XL, and XH is a curve showing a relationship between the torque Tq and the target frequency fi, like Figure 8. The first curve XN shows the characteristics when there is no shift in the first resonance frequency f1 (e.g., when the control system is new). The second curve XL shows the characteristics when the first resonance frequency f1 is shifted toward the lower side. The third curve XH shows the characteristics when the first resonance frequency f1 is shifted toward the higher side.

The first resonance frequency f1 shown in Figure 9 is an initial frequency and serves as a reference frequency. Figure 9 illustrates the case where the target frequency fi of the field current is set to a value fa lower than the initial first resonance frequency f1 and the case where it is set to a value fb higher than the initial first resonance frequency $f_1$. Tqa and Tqb indicate torque difference that may occur when the first resonance frequency f1 shifts from the low side to the high side. When the target frequency fi of the field current is set to a value fa lower than the first resonance frequency f1, the torque Tq on the second curve XL is close to the maximum torque value Trmax. The torque Tq value on the third curve XH is close to the minimum torque value Trmin. Consequently, the torque difference Tqa becomes a large value.

On the other hand, when the target frequency fi is set to a value fb higher than the first resonance frequency f1, the frequency fb is higher than the first resonance frequency of either the second or third curve XL or XH. Therefore, even if a change occurs in difference between the first resonance frequency and the frequency fb, the change in the torque Tq is relatively small. The torque Tq on both the second curve XL and the third curve XH are close to the maximum value Trmax. Consequently, the torque difference Tqb is smaller than the torque difference Tqa. Therefore, it is preferable for the control device 30 to set the target frequency fi to a value higher than the first resonance frequency f1. As a result, even if the first resonance frequency f1 or the second resonance frequency f2 changes due to degradation of the field windings 70, etc., the amount of change in the torque Tq relative to the target frequency fi is smaller.

The control device 30 may set the target frequency fi such that value obtained by subtracting the electrical angular frequency frmax (when the rotational speed of the rotor 60 is at its maximum) from the target frequency fi is higher than the first resonance frequency f1. This range of the target frequency fi is a range indicated by C in Figure 8 (the range where fi > f1 + frmax). fi - frmax corresponds to lower frequency feL when the rotor 60 is rotating at its maximum rotational speed. By setting the target frequency fi such that f1 < fi - frmax is satisfied, the motor 40 is operated under conditions where the torque Tq is relatively large and the change in the torque Tq is small, regardless of the rotational speed of the rotor 60.

The control device 30 may set the target frequency fi to 1/10 or less of the carrier frequency fc (i.e., the frequency at which each switch SUp to SWn constituting the inverter 20 is switched) (fi ≤ fc/10). An example range for the target frequency fi is shown as a range D in Figure 8 (the range where fi ≤ fc/10). Setting the target frequency fi in this manner enables a composite current, superimposed with high-frequency excitation current for at least 10 electrical angles within one electrical angle period of the fundamental wave current, to flow through the stator winding 52. Consequently, distortion of the fundamental wave current is suppressed.

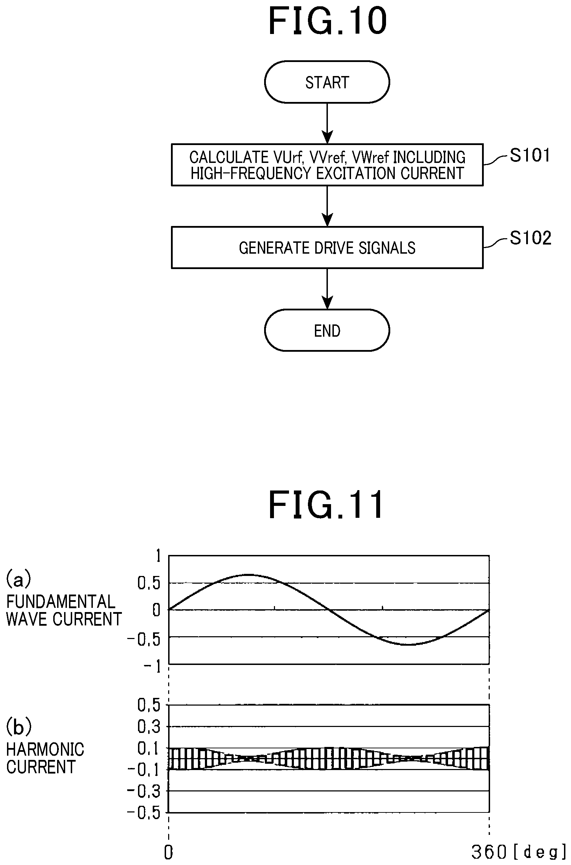

Figure 10 shows a flowchart of the processing performed by the control device 30 to control the motor 40. The processing shown in Figure 10 is realized, for example, by the CPU constituting the control device 30 executing a program installed in the ROM. This processing is repeatedly performed, for example, at a predetermined control cycle.

In step S101, the command voltage calculation unit 108 sets the target frequency fi to a value closer to the first resonance frequency f1 than to the second resonance frequency f2.

It is preferable for the command voltage calculation unit 108 to set the target frequency fi such that fi > f1, and the target frequency fi may be set to satisfy f1 < fi - frmax. The command voltage calculation unit 108 may also set the target frequency fi to satisfy fi ≤ fc/10.

In step S101, the command voltage calculation unit 108 calculates the U-phase command voltage VUrf, the V-phase command voltage VVref, and the W-phase command voltage VWref, which include components of the lower frequency feL and the upper frequency feH.

In step S102, the signal generation unit 109 generates the drive signals for the upper, lower arm switch SuP to SWn, in U, V, and W-phase based on the calculated U-phase command voltage VuRef, V-phase command voltage VVref, and W-phase command voltage VWref.

As described above, according to the control program for motor 40 of the present embodiment and the control method executed thereby, an excitation current calculation step is performed as shown in step S101, characterized in that the high-frequency excitation current flowing through the stator windings is calculated to induce the field current in the field windings 70. In the excitation current calculation step, the lower frequency feL component and the upper frequency feH component are included in the high-frequency excitation current. Furthermore, as shown in step S102, a switch control step is performed to perform switching control of the inverter 20 such that the composite current, superimposed with high-frequency excitation current onto the fundamental wave current flowing through the stator winding 52, is supplied to the stator winding 52. This suppresses frequency deviation between the actual field current frequency flowing and the target frequency fi frequency. Consequently, this contributes to improving the performance of the motor 40.

<Another Embodiments>

The above embodiments may be modified as follows.
The high-frequency excitation current applied to the stator winding is not limited to the sinusoidal waveform shown in part (b) of Figure 6 but may also be a square waveform as shown in part (b) of Figure 11.
In the rotor 60, the second wiring 71b may be positioned radially closer to the stator 50 than the first wiring 71a.
The motor need not be limited to an inner rotor type motor and may also be an outer rotor type motor. In this case, each of main poles protrudes radially inward from the rotor core.
The motor may be a delta-connected motor, not limited to a star-connected motor.
The stator core may be a stator core without teeth.
The motor may be used not only as a vehicle main engine but also, for example, as an ISG (Integrated Starter Generator), which is an electric motor and generator.
The mobile object on which the control system is mounted need not be limited to a vehicle; it may also be, for example, an aircraft or a vessel. The control system need not be limited to a system mounted on a mobile body; it may also be a stationary system.
The control device and method described herein may be implemented by a dedicated computer provided by configuring a processor and memory programmed to execute one or more functions embodied by a computer program. Alternatively, the control device and method described herein may be implemented by a dedicated computer provided by configuring a processor using one or more dedicated hardware logic circuits. Alternatively, the control device and method described herein may be implemented by one or more dedicated computers configured by a combination of a processor and memory programmed to execute one or more functions, and one or more processors configured by hardware logic circuits. Furthermore, the computer program may be stored on a computer-readable, non-transitory tangible medium as instructions executable by a computer.
The technical concept extracted from the above embodiments is described below.

[Configuration 1]

A control device (30) for a system comprising a motor having a stator (50) provided with stator windings (52) and a rotor (60) provided with field windings (70), and an inverter (20) electrically connected to the stator windings, the control device comprising:

an excitation current calculation unit configured to calculate an excitation current to be supplied to the stator windings, which induces field current in the field windings; and
a switch control unit configured to perform switching control of the inverter to cause a composite current, in which the excitation current is superimposed to a fundamental wave current, a frequency of the excitation current being higher than a frequency of the fundamental wave current, to flow through the stator windings,
characterized in that, the excitation current calculation calculates the excitation current including a lower frequency (fi-fr) component obtained by subtracting an electrical angular frequency (fr) of the rotor from the target frequency (fi) of the field current, and an upper frequency (fi+fr) component obtained by adding the electrical angular frequency to the target frequency.

[Configuration 2]

The control device according to configuration 1, characterized in that

the rotor comprises a rotor core (60) and a plurality of main poles (62) provided at predetermined intervals in the circumferential direction and protruding radially from the rotor core,
the field windings includes a first wiring (71a) and a second wiring (71b) electrically connected in series,

the first wiring (71a) and the second wiring (71b) are wound around each of the plurality of main poles,
the rotor further comprises a diode (80) electrically connected in parallel with a series-connected element of the first wiring and the second wiring, and a capacitor (90) electrically connected in parallel with the second wiring, and
the target frequency is configured to be set to a value closer to a first resonant frequency (f1), which is resonant frequency of a first circuit formed by the first wiring and the capacitor, than a second resonant frequency (f2), which is resonant frequency of a second circuit formed by the second wiring and the capacitor.

[Configuration 3]

The control device according to configuration 2, characterized in that

the first resonant frequency is higher than the second resonant frequency, and
the excitation current calculation unit is configured to set the target frequency to a value higher than the first resonance frequency.

[Configuration 4]

The control device according to configuration 3, characterized in that
the excitation current calculation unit is configured to set the target frequency such that the value obtained by subtracting the electrical angular frequency corresponding to maximum rotational speed of the rotor from the target frequency is higher than the first resonance frequency.

[Configuration 5]

The control device according to configurations 2 or 3, characterized in that
the number of turns of the first wiring is smaller than the number of turns of the second wiring.

[Configuration 6]

The control device according to configurations 1 or 2, characterized in that
the excitation current calculation unit is configured to set the target frequency to 1/10 or less of carrier frequency of the inverter.

**Claims**

1. A control device (30) for a system comprising a motor having a stator (50) provided with stator windings (52) and a rotor (60) provided with field windings (70), and an inverter (20) electrically connected to the stator windings, the control device comprising:

   an excitation current calculation unit configured to calculate an excitation current to be supplied to the stator windings, which induces field current in the field windings; and
   a switch control unit configured to perform switching control of the inverter to cause a composite current, in which the excitation current is superimposed to a fundamental wave current, a frequency of the excitation current being higher than a frequency of the fundamental wave current, to flow through the stator windings, and
   **characterized in that**, the excitation current calculation unit calculates the excitation current including a lower frequency (fi-fr) component obtained by subtracting an electrical angular frequency (fr) of the rotor from the target frequency (fi) of the field current, and an upper frequency (fi+fr) component obtained by adding the electrical angular frequency to the target frequency.

2. The control device according to claim 1, **characterized in that**

   the rotor comprises a rotor core (60) and a plurality of main poles (62) provided at predetermined intervals in the circumferential direction and protruding radially from the rotor core,
   the field windings includes a first wiring (71a) and a second wiring (71b) electrically connected in series,
   the first wiring (71a) and the second wiring (71b) are wound around each of the plurality of main poles,
   the rotor further comprises a diode (80) electrically connected in parallel with a series-connected element of the first wiring and the second wiring, and a capacitor (90) electrically connected in parallel with the second wiring, and
the target frequency is configured to be set to a value closer to a first resonant frequency (fl), which is resonant frequency of a first circuit formed by the first wiring and the capacitor, than a second resonant frequency (f2), which is resonant frequency of a second circuit formed by the second wiring and the capacitor.

3. The control device according to claim 2, **characterized in that**

the first resonant frequency is higher than the second resonant frequency, and
the excitation current calculation unit is configured to set the target frequency to a value higher than the first resonance frequency.

4. The control device according to claim 3, **characterized in that**
the excitation current calculation unit is configured to set the target frequency such that the value obtained by subtracting the electrical angular frequency corresponding to maximum rotational speed of the rotor from the target frequency is higher than the first resonance frequency.

5. The control device according to claims 2 or 3, **characterized in that**
the number of turns of the first wiring is smaller than the number of turns of the second wiring.

6. The control device according to claims 1 or 2, **characterized in that**
the excitation current calculation unit is configured to set the target frequency to 1/10 or less of carrier frequency of the inverter.

7. A motor control program applicable to a system comprising a motor having a stator (50) provided with stator windings (52) and a rotor (60) provided with field windings (70), and an inverter (20) electrically connected to the stator windings, the motor control program is configured to cause a computer (31) to perform:

an excitation current calculation step for calculating an excitation current to be supplied to the stator windings, which induces field current in the field windings; and
the processing step for performing switching control of the inverter to cause a composite current, in which the excitation current is superimposed to a fundamental wave current, a frequency of the excitation current being higher than a frequency of the fundamental wave current, to flow through the stator windings,
**characterized in that**, the excitation current calculation step includes calculating the excitation current including a lower frequency (fi-fr) component obtained by subtracting an electrical angular frequency (fr) of the rotor from the target frequency (fi) of the field current, and an upper frequency (fi+fr) component obtained by adding the electrical angular frequency to the target frequency.

# FIG.1

# FIG.2

# EP 4 769 935 A1

# FIG.3

# FIG.4

$$f1 = \frac{1}{2\pi\sqrt{L1 \times C}}$$

$$f2 = \frac{1}{2\pi\sqrt{L2 \times C}}$$

# FIG.5

# FIG.6

(a)
FUNDAMENTAL
WAVE CURRENT

(b)
HARMONIC
CURRENT

# FIG.7

# FIG.8

# FIG.9

# FIG.10

START

↓

CALCULATE VUrf, VVref, VWref INCLUDING
HIGH-FREQUENCY EXCITATION CURRENT — S101

↓

GENERATE DRIVE SIGNALS — S102

↓

END

# FIG.11

(a)
FUNDAMENTAL
WAVE CURRENT

(b)
HARMONIC
CURRENT

0                                    360 [deg]

# EP 4 769 935 A1

| | INTERNATIONAL SEARCH REPORT | International application No. |
|---|---|---|
| | | **PCT/JP2024/026798** |

**A. CLASSIFICATION OF SUBJECT MATTER**

*H02P 25/024*(2016.01)i
FI: H02P25/024

According to International Patent Classification (IPC) or to both national classification and IPC

**B. FIELDS SEARCHED**

Minimum documentation searched (classification system followed by classification symbols)

H02P25/024

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2020-124100 A (DENSO CORPORATION) 13 August 2020 (2020-08-13) paragraphs [0001]-[0080], fig. 1-19 | 1-7 |
| A | JP 2021-166447 A (KABUSHIKI KAISHA MEIDENSHA) 14 October 2021 (2021-10-14) paragraphs [0001]-[0089], fig. 1-9 | 1-7 |
| A | WO 2018/117144 A1 (DENSO CORPORATION) 28 June 2018 (2018-06-28) paragraphs [0001]-[0158], fig. 1-27 | 1-7 |
| A | JP 2010-45956 A (DENSO CORPORATION) 25 February 2010 (2010-02-25) paragraphs [0001]-[0042], fig. 1-13 | 1-7 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **26 September 2024** | **08 October 2024** |

| Name and mailing address of the ISA/JP | Authorized officer |
|---|---|
| **Japan Patent Office (ISA/JP)** 3-4-3 Kasumigaseki, Chiyoda-ku, Tokyo 100-8915 Japan | |
| | Telephone No. |

Form PCT/ISA/210 (second sheet) (July 2022)

**INTERNATIONAL SEARCH REPORT**
Information on patent family members

International application No.

**PCT/JP2024/026798**

| Patent document cited in search report | | | Publication date (day/month/year) | Patent family member(s) | | | Publication date (day/month/year) |
|---|---|---|---|---|---|---|---|
| JP | 2020-124100 | A | 13 August 2020 | US paragraphs [0001]-[0126], fig. 1-19 | 2020/0251940 | A1 | |
| JP | 2021-166447 | A | 14 October 2021 | (Family: none) | | | |
| WO | 2018/117144 | A1 | 28 June 2018 | US paragraphs [0001]-[0180], fig. 1-27 | 2019/0312539 | A1 | |
| | | | | EP | 3562009 | A1 | |
| | | | | CN | 110089013 | A | |
| JP | 2010-45956 | A | 25 February 2010 | (Family: none) | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2023136618 A

- JP 2018102111 A